# EUROPEAN PATENT SPECIFICATION

(11) **EP 0 927 631 B1**
(45) Date of publication and mention of the grant of the patent: **19.11.2003**
(21) Application number: 98310761.6
(22) Date of filing: 24.12.1998
(51) Int. Cl.: B32B 25/18, F15B 1/10, F16F 9/08

(54) **Diaphragm and accumulator using the same**
Membrane und Speicher der diese verwendet
Diaphragme et accumulateur utilisant ceci

(30) Priority: 25.12.1997 JP 35812397
(43) Date of publication of application: 07.07.1999
(73) Proprietor: TOKAI RUBBER INDUSTRIES, LTD., Komaki-shi Aichi 485 (JP)
(72) Inventor: Takamatsu, Shigeaki, Hekinan-shi, Aichi 447-0886 (JP); Nagaoka, Hiroaki, Inuyama-shi, Aichi 484-0061 (JP)
(74) Representative: Frankland, Nigel Howard

(56) References cited:
- EP-A- 0 607 085
- EP-A- 0 682 060
- EP-A- 0 858 883
- FR-A- 2 662 638
- FR-A- 2 685 740
- PATENT ABSTRACTS OF JAPAN vol. 097, no. 008, 29 August 1997 & JP 09 111064 A (TOKAI RUBBER IND LTD), 28 April 1997
- PATENT ABSTRACTS OF JAPAN vol. 096, no. 005, 31 May 1996 & JP 08 014202 A (TOKAI RUBBER IND LTD), 16 January 1996
- PATENT ABSTRACTS OF JAPAN vol. 018, no. 133 (M-1571), 4 March 1994 & JP 05 318684 A (TOKAI RUBBER IND LTD), 3 December 1993

## Description

**THE PRESENT INVENTION** relates to a diaphragm and an accumulator using the same for hydraulic system and the like of automobile vehicles, industrial vehicles and the like.

An accumulator has a pressure accumulating function and generally comprises a metallic shell and a diaphragm installed within the shell for dividing an internal space of the shell into two chambers (a gas chamber and an oil chamber). The accumulator when ready for use has a gas, such as nitrogen, sealed into the gas chamber and the oil chamber is in communication with a hydraulic circuit of the hydraulic system of a vehicle via a circulation hole. When the pressure in the oil chamber becomes larger than that in the gas chamber, by hydraulic oil flowing into the oil chamber via the circulation hole, the diaphragm elastically deforms so that the gas chamber is compressed and its volume become smaller. On the other hand, when the oil chamber is enlarged, pressure is accumulated in the hydraulic oil. The diaphragm generally comprises a resin layer for gas shielding, a rubber layer adjacent to the gas chamber formed on the resin layer and a rubber layer adjacent to the oil chamber formed on the resin layer wherein in these two rubber layers sandwich the resin layer. As the material for forming both rubber layers adjacent to the gas chamber and the oil chamber, butyl rubber is used.

However, if the diaphragm having the above construction is subjected to an operating durability test at a temperature of not more than room temperature and under high operating pressure, in which the rubber is repetitively compressed and strained by elastic deformation, as it would be in operation, and in which the rubber is rubbed and worn, the result is that the rubber layers crack and this causes a deterioration in the durability of the diaphragm. Therefore, there is a problem in that service life of an accumulator using such a diaphragm is relatively short.

Document FR-A-2685740 discloses a flexible partition member for a hydraulic accumulator, which member is highly durable to assure a long service life of the accumulator. The flexible partition member includes an integrally layered composite portion which comprises at least one gas-barrier layer, at least one elastic layer and two rubber layers bonded by a bonding agent to opposite surfaces of the integrally layered composite portion; the rubber layers may consist of acrylonitrile butadiene rubber.

Document FR-A-2662638 discloses an accumulator including a shell divided into a gas chamber and a fluid inflow chamber by a bladder made of a cold-resistant and gas-barrier laminated sheet; the sheet comprises a polyvinyl alcohol resin film, a first rubber sheet layer and a first non-vapor and non-plasticizer-permeable resin film interposed between the polyvinyl alcohol resin film and the first rubber sheet which comprises a butyl rubber.

In view of the foregoing,. it is an object of the present invention to provide a diaphragm having good operating characteristics, both at a low temperature and room temperature, and also superior durability and to provide an accumulator using the same.

According to one aspect of this invention there is provided a diaphragm comprising a layer of substantially gas impermeable resin, a first rubber layer provided on one side of the resin layer, said rubber layer being formed of a mixture of butyl rubber and ethylene-propylene-diene terpolymer and a second rubber layer on the other side of the resin layer.

In this Specification the term "butyl rubber" is used as a generic word and includes halogenated rubbers such as chlorobutyl rubber or bromobutyl rubber.

The diaphragm may be primarily intended for use in an accumulator of the type having a gas chamber and an oil chamber separated by the diaphragm. The first rubber layer may be located to face the gas chamber with the second rubber layer facing the oil chamber.

Preferably said first rubber layer is provided with a plurality of circumferential grooves, the grooves each having a concave cross-section. The circumferential grooves comprise a plurality of circular grooves, with each successive groove having a smaller diameter, the grooves being centred on the centre of the diaphragm, which is preferably of circular form.

Conveniently the resin layer is made from ethylene-vinyl alcohol copolymer (EVOH), polyamide resin, polyvinylidene fluoride, polyvinylidene chloride, polyphenylene sulfide, liquid crystal polymer and/or polyethylene naphthalate, alone or in any combination thereof.

In one embodiment the resin layer is a laminate, the laminate having a central layer of ethylene-vinyl alcohol copolymer and outer layers of a polyamide resin. Preferably each outer polyamide layer is of nylon.

Conveniently in the first rubber layer, the ratio of butyl rubber to ethylene-propylene-diene terpolymer is between 90/10 and 60/40. The most preferred ratio is in the range 85/15 to 70/30.

The rubber forming the second layer may be the same as the rubber forming the first layer or alternatively may be butyl rubber, natural rubber, epichlorohydrin rubber, acrylonitrile butadiene rubber and/or hydrogenated acrylonitrile butadiene rubber alone or in any combination.

In embodiments of the invention one or both of the rubber layers may incorporate an additive in the form of a vulcanizing agent, a vulcanizing accelerator, an antioxidant, a softener and/or a plasticiser.

This invention also relates to an accumulator comprising a shell and a diaphragm which divides an internal space within the shell into a gas chamber and an oil chamber, the diaphragm comprising a diaphragm as described above.

Conveniently the accumulator comprises two hemispherical split shells, the diaphragm being secured to one split shell adjacent an open mouth thereof by a ring holder which seals the periphery of the diaphragm to the inner surface of the said one split shell, the other split shell having an open mouth thereof secured to the open mouth of the first split shell.

Following a series of researches on the durability of the rubber layers of a diaphragm, the inventors of the present invention reached a conclusions that the rubber layer adjacent to the gas chamber is more likely to be worn and crack than the rubber layer adjacent to the oil chamber. After further researches on materials that might be used in the rubber layer adjacent to the gas chamber, the inventors found out that operating characteristics, both at a low temperature and room temperature, were improved using rubber material contain ethylene-propylene-diene terpolymer and butyl rubber for forming the rubber layer adjacent to a gas chamber, instead of using butyl rubber alone.

Further, it has been found that when a plurality of grooves each having a concave cross-section, extending in the circumferential direction, are formed on a surface of the rubber layer adjacent to the gas chamber, durability of the rubber layer adjacent to the gas chamber can further be improved.

In order that the invention may be more readily understood, the invention will now be described, by way of example, with reference to the accompanying drawings in which:
FIGURE 1 is a sectional view illustrating one embodiment of an accumulator according to the present invention,
FIGURE 2 is an enlarged sectional view illustrating the construction of one embodiment of a diaphragm according to the present invention,
FIGURE 3 is an enlarged sectional view illustrating the construction of a resin layer of the diaphragm according to the present invention,
FIGURE 4 is an enlarged sectional view illustrating the construction of another embodiment of the diaphragm according to the present invention,
FIGURE 5 (A) and FIGURE 5 (B) are explanatory views of flex cracking tests of the diaphragm,
FIGURE 6 is a sectional view illustrating a ring holder being mounted on a lower split-shell, and
FIGURE 7 is a sectional view illustrating the ring holder when mounted on the lower split-shell.

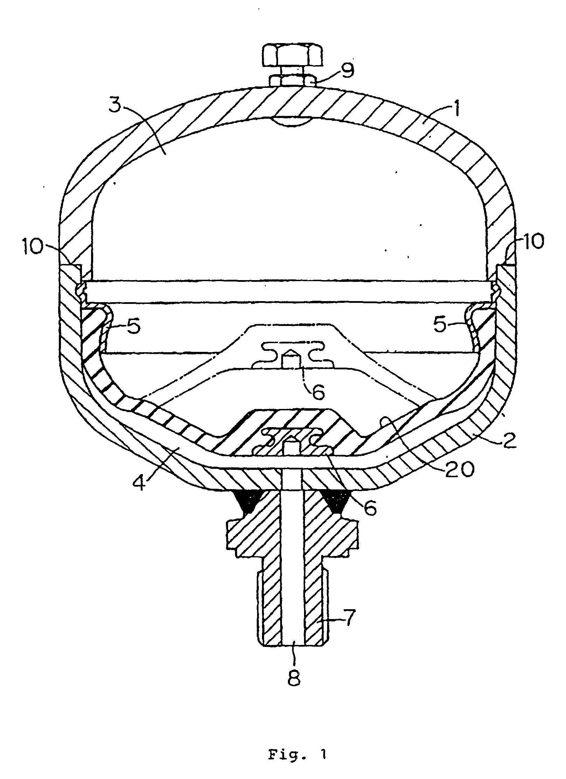

Figure 1 is a view illustrating one embodiment of an accumulator according to the present invention. The accumulator comprises a pair of split-shells 1,2 and a diaphragm 20 for dividing an internal space of the split-shells 1,2 into a gas chamber 3 and an oil chamber 4. In the figure, 5 is a ring holder, 6 is a poppet, 7 is a plug having an oil port 8, 9 is a gas plug, 10 is a portion welded by electron beam which seals together the split cells 1,2. In the figure, an initial position of the diaphragm is shown in solid line and a dashed line illustrates a state in which the diaphragm has elastically deformed.

The material of the split-shells 1,2 is not critical as long as it is metallic. For example, a shell formed from iron, aluminium alloy or the like may preferably be used.

The diaphragm 20 comprises a resin layer 21 for gas shielding and a rubber layer 22 adjacent to the gas chamber 3 and a rubber layer 23 adjacent to the oil chamber 4, wherein the rubber layers 22,23 are integrally bonded to both sides of the resin layer 21.

The resin layer 21 prevents gas sealed in the gas chamber 3 from permeating through the diaphragm. The material of the resin layer may be selected from many options but must have a low gas permeability. Examples of such materials include ethylene-vinyl alcohol copolymer (EVOH), polyamide resin, polyvinylidene fluoride, polyvinylidene chloride, polyphenylene sulfide, liquid crystal polymer and polyethylene naphthalate. These may be used either alone or in any combination thereof. The resin layer 21 may have a single layer-structure or a multi-layer structure using two or more layers.

Many different types of ethylene-vinyl alcohol (EVOH) copolymer may be used. However, it is preferable to employ the EVOH wherein ethylene is present in an amount of 20 to 65% by weight (just abbreviated to %, hereinafter) and vinyl alcohol is present in an amount of the remaining %. Among all, the EVOH wherein ethylene is present in an amount of 32% is suitable.

Examples of suitable polyamide resins include nylon 6, nylon 66, nylon 6-10 and nylon 6-12. These are employed either alone or in any combination thereof. If such polyamide resin contains nylon 6 or nylon 66 as a base, its melting point becomes near to that of preferred EVOH. Therefore, it is possible to employ various mixtures of nylon 6 or nylon 66 and another nylon resin. Especially, it is preferable to employ a mixture of the above polyamide resin and polyolefin resin. Since polyolefin resin has a poor water absorbability in such a mixture, it prevents water absorption by the EVOH. It is to be understood that if the EVOH absorbs water, the gas barrier property of EVOH deteriorates. This can be prevented by the addition of the polyolefine resins.

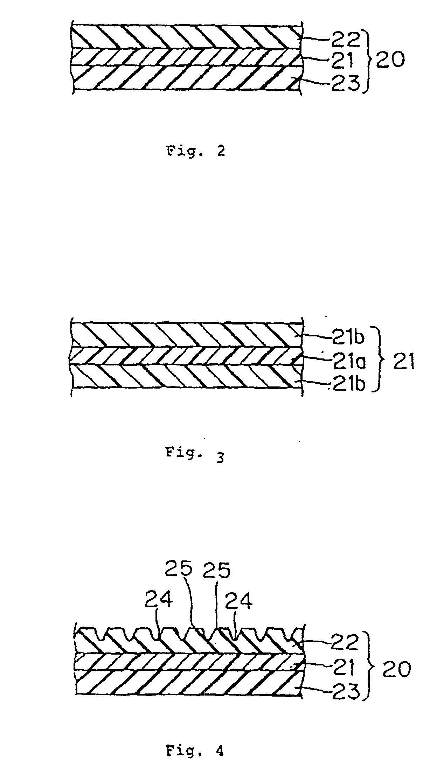

The resin layer 21, as shown in Figure 3, may be a laminate. The central layer 21a of the laminate may comprise EVOH copolymer and the outer layers 21 b may comprise a polyamide resin.

As a material for forming the rubber layer 22 adjacent to the gas chamber 3, a mixture of butyl rubber and ethylene-propylene-diene terpolymer (just abbreviated to EPDM hereinafter) is used.

Examples of the butyl rubber include butyl rubber (IIR), chlorobutyl rubber (Cl-IIR) and bromobutyl rubber (BR-IIR). These are employed either solely or in combination of two or more. Above all, it is preferable to employ chlorobutyl rubber (Cl-IIR) in view of its superior performance under permanent compressive strain.

Examples of the third component (diene component) of the EPDM include ethylidene norbornene, dicyclopentadiene and 1,4-hexadiene.

The content of ethylene in the EPDM is preferably set within a range of 50 to 70%, more preferably, 50 to 60%. It has been found that when the content is less than 50%, the tensile strength of raw rubber is decreased. On the other hand, when it is over 70%, operating characteristics at a low temperature deteriorate. Further, the content of the third component (diene component) in the EPDM is preferably set at 5% and the remaining % is the content of propylene. It is preferably that an iodine value of the EPDM is set within a range of 10 to 24; more preferably, 12 to 17. It has been found that when the iodine value is less than 10, vulcanization speed becomes slow, while when it is over 24, heat resistance deteriorates.

In addition to the butyl rubber and the EPDM, a filler may be added into the material for forming the rubber layer 22 adjacent to the gas chamber 3. There is no specific property required for such a filler. For example, carbon black may be used. The content of the filler is preferably set in such a manner that hardness of the rubber material is in the range of 60 to 80 (in accordance with JIS A). It has been found that when the hardness (JIS A) is less than 60, the reinforcing effect for the resin layer 21 of the diaphragm 20 is insufficient and consequently the rubber layer 22 adjacent to the gas chamber 3 itself may not deform smoothly, when the diaphragm 20 deforms, and it has been found that when the hardness (JIS A) is over 80, the elongation at break of the rubber material itself is decreased.

The material forming the rubber layer 23 adjacent to the oil chamber 4 may be selected from many options. Conventional rubber may be used. Examples of other suitable materials include butyl rubber, natural rubber, epichlorohydrin rubber, acrylonitrile butadiene rubber (NBR) and hydrogenated acrylonitrile butadiene rubber (H-NBR). These are employed either alone or in any combination of two or more. In the present invention, the material for forming the rubber layer 23 adjacent to the oil chamber 4 may be the same as that of the rubber layer 22 adjacent to the gas chamber 3.

In addition to the rubber materials, an additive such as a vulcanizing agent, a vulcanization accelerator, an antioxidant, a softener and a plasticiser may appropriately be added into the material for forming the rubber layer 22 adjacent to the gas chamber 3 and the rubber layer 23 adjacent to the oil chamber 4.

The preferred diaphragm 20 of the present invention may be produced, for example, in the following manner. That is, the resin layer (or a resin film) 21 for shielding gas is produced by using a resin film having low gas permeability such as the EVOH and the polyamide resin, or a lamination of two or more layers of such materials. Secondly, conventional adhesive is applied on both sides of the resin layer (or the resin film) 21 and the materials for forming the rubber layer 22 adjacent to the gas chamber 3 and the rubber layer 23 adjacent to the oil chamber 4 are press-formed with the resin by a presser and the adhesive is cured to adhere the rubber layers to the resin. Thus, a diaphragm 20 having a layered structure as shown in Figure 2 is created.

The resin layer 21 of thus obtained preferred diaphragm 20 of the present invention is usually 10 to 210 µ m thick. The rubber layer 22 adjacent to the gas chamber 3 is usually 1 to 4mm, preferably 1.5 to 3mm thick. The rubber layer 23 adjacent to the oil chamber 4 is usually 1 to 4mm, preferably 1.5 to 3mm thick.

The accumulator of the present invention may be produced using the thus obtained diaphragm 20, for example, in the following manner. First, a peripheral edge of the diaphragm 20 is positioned at an edge of an inner circumference of an open mouth provided at the top of the lower split-shell 2. This split cell 2 is one of a pair of split-shells 1,2, each shaped generally hemispherically. The edge of the diaphragm 20 is fixed by pinching it between a periphery of the ring holder 5 and the edge of the inner circumference of the open mouth of the lower split-shell 2. Next, an open mouth of the upper split-shell 1, is engaged with the open mouth of the lower split-shell 2. The split cells are welded together by electron beam or the like. Thus, the accumulator shown in Figure 1 can be produced.

In the present invention, a plurality of grooves 24 each having a concave cross-section, extending in the circumferential direction, may optionally be formed on the surface of the rubber layer 22 at certain intervals as shown in Figure 4 so that ribs 25 may be formed on the surface of the rubber layer 22. It has been found that the durability of the rubber layer 22 adjacent to the gas chamber 3 is improved by the provision of grooves 24 having such a form. Thus the durability of both the diaphragm 20 and the accumulator using the same may be improved by providing the grooves 24. In addition, it is to be understood that the grooves 24 having the concave cross-section may have any generally concave cross-section, and includes grooves having a V-shaped cross-section and the like.

The shape of the shell in the accumulator of the present invention is not limited to a generally spherical shell formed by engaging the pair of split-shells 1,2, each shaped into a generally hemisphere, and includes a cylinder, a box and the like.

Examples will next be described along with comparative examples.

Initially the ingredients shown in the following Tables 1 and 2 were mixed together in ratios shown in the same Tables so that rubber compositions 1 to 10 were prepared. The physical properties of each composition at ordinary conditions, low-temperature torsion, durability and compression set were determined in the following manner.

### Physical Properties at Ordinary Conditions

Tensile strength (Mpa), elongation at a break (%) and hardness (JIS A) were determined in accordance with a manner described in JIS K 6301.

### Low-Temperature Torsion

The low-temperature torsion test was carried out in accordance with a manner described in JIS K 6301 in order to evaluate flexibility of each rubber composition at a low temperature.

### Durability

The durability was evaluated with a flex cracking test in accordance with JIS K 6260. The number of bends was counted until each test piece (the rubber composition) has reached the 6th grade (a crack not less than 3.0 mm long). In addition, the number of bends was limited to 500,000 times and the grade at 500,000 bends was mentioned when a test piece has not reached the 6th grade at 500,000 bends.

### A Compression Set

A compression set was determined under conditions of 120°C x 70 hours in accordance with JIS K 6301.

**TABLE 1**

| (Parts by weight) | | | | | | |
|---|---|---|---|---|---|---|
| RUBBER COMPOSITION | 1 | 2 | 3 | 4 | 5 | 6 |
| C1-IIR *1 | 85 | 70 | 85 | 85 | - | - |
| IIR *2 | - | - | - | - | 85 | - |
| Br-IIR *3 | - | - | - | - | - | 85 |
| EPDM *4 | 15 | 30 | 15 | 15 | 15 | 15 |
| Carbon black (SRF) | 110 | 110 | 90 | 130 | 110 | 110 |
| Stearic acid | 1 | 1 | 1 | 1 | 1 | 1 |
| Oil (dioctyl sebacate) | 10 | 10 | 10 | 10 | 10 | 10 |
| Zinc Oxide | 5 | 5 | 5 | 5 | 5 | 5 |
| Vulcanization Accelerator (sulfenamide type accelerator) | 1 | 1 | 1 | 1 | 1 | I |
| Antioxidant (TMDQ) | 1 | 1 | 1 | 1 | 1 | 1 |
| Sulfur | - | - | - | - | 0.8 | - |
| Physical properties at ordinary conditions tensile strength (Mpa) | 10.6 | 9.8 | 10.7 | 10.7 | 9.5 | 10.8 |
| Elongation at break (%) | 300 | 320 | 360 | 270 | 320 | 300 |
| Hardness (JIS A) | 70 | 70 | 60 | 75 | 69 | 70 |
| Low temperature torsion T5 (°C) | -47.4 | -48.5 | -47.1 | -46.9 | -46 | -46.8 |
| Durability (flex cracking test) | 2nd *5 | 400,000 | 2nd *5 | 140,000 | 300,000 | 450,000 |
| Compression Set (120°C x 70 hours) | 45 | 49 | 44 | 46 | 85 | 49 |

| | | | | | | |
|---|---|---|---|---|---|---|
| Note: *1:Chlorobutyl 1066 available from JSR Corporation. | | | | | | |
| *2:Butyl 268 available from JSR Corporation. | | | | | | |
| *3:Bromobutyl 2244 available from JSR Corporation. | | | | | | |
| *4: ESPRENE 532 available from Sumitomo Chemical Co. Ltd. (The content of ethylene: 51.1%, iodine value: 12) | | | | | | |
| *5:Whether a crack is very slight or not can be visually evaluated. | | | | | | |

**TABLE 2**

| (Parts by weight) | | | | |
|---|---|---|---|---|
| RUBBER COMPOSITION | 7 | 8 | 9 | 10 |
| Cl-IIR *1 | 100 | 85 | 85 | 55 |
| EPDM*2 | - | - | - | 45 |
| Natural rubber | - | 15 | - | - |
| BR *3 | - | - | 15 | - |
| Carbon black (SRF) | 110 | 110 | 110 | 110 |
| Stearic acid | 1 | 1 | 1 | 1 |
| Oil (dioctyl sebacate) | 10 | 10 | 10 | 10 |
| Zinc Oxide | 5 | 5 | 5 | 5 |
| Vulcanization accelerator (sulfenamide type accelerator) | 1 | 1 | 1 | 1 |
| Antioxidant (TMDQ) | 1 | 1 | 1 | 1 |
| Physical properties at ordinary conditions tensile strength (Mpa) | 10.6 | 11.5 | 11.5 | 9.2 |
| Elongation at break (%) | 270 270 | 300 300 | 260 260 | 300 300 |
| Hardness (JIS A) | 70 | 72 | 72 | 72 |
| Low temperature torsion T5 (°C) | -44 | -47.2 | -44.8 | -48.8 |
| Durability (flex cracking test) | 50,000 times | 140,000 times | 260,000 times | 2nd grade *4 |
| Compression set (120°C x 70 hours) | 38 | 48 | 35 | 58 |

| | | | | |
|---|---|---|---|---|
| Note: *1:Chlorobutyl 1066 available from JSR Corporation. | | | | |
| *2:ESPRENE 532 available from Sumitomo Chemical Co. Ltd. (The content of ethylene: 51.1% iodine value: 12) | | | | |
| *3:UBEPOL-BR150 available from UBE Industries Ltd. | | | | |
| *4:Whether a crack is slightly caused or not can be visually evaluated. | | | | |

From the results of Tables 1 and 2, it can be seen that with compositions 7 to 9 which contain chlorobutyl rubber, but which do not contain EPDM, durability is inferior. On the other hand, with the rubber compositions 1 to 6 and 10, which contain both chlorobutyl rubber and EPDM, durability is excellent.

### EXAMPLES 1 TO 11

Examples 1 to 11 will be described with reference to Tables 3 to 5.

First, EVOH (F-101, available from Kuraray Co., Ltd., the content of ethylene: 32%) and polyamide resin (Super tough nylon ST811HS, available from du Pont) were prepared and double-extruded by an extruder so as to be formed into a three-layered resin layer 21 shown in Figure 3. In Figure 3, 21a is an EVOH layer (50 µm thick) and 21b is a polyamide resin layer (80 µm thick). Next, conventional adhesive was applied onto both sides of the resin layer 21, and each rubber composition shown in Tables 3 and 4 for forming the rubber layer 22 adjacent to the gas chamber 3 and for forming the rubber layer 23 adjacent to the oil chamber 4 were press-formed with the resin layer by a presser. The adhesive was cured to adhere the rubber layers to the resin layer. Thus, a diaphragm was produced (see Figure 2). The rubber layer 22 adjacent to the gas chamber 3 was 1.5 mm thick and the rubber layer 23 adjacent to the oil chamber 4 was 1.5 mm thick.

### COMPARATIVE EXAMPLES 1 TO 6

The rubber compositions 7 to 9, which do not include EPDM, were used for forming the rubber layer 22 adjacent to the gas chamber 3, as shown in Table 5. Except for that, diaphragms were prepared in the same way as in Example 1.

A durability test was carried out using thus diaphragms of the Examples and Comparative Examples at room temperature and a low temperature (-30°C) in accordance with the following standard. The results are shown in Table 3 to 5.

### Operating Durability Test

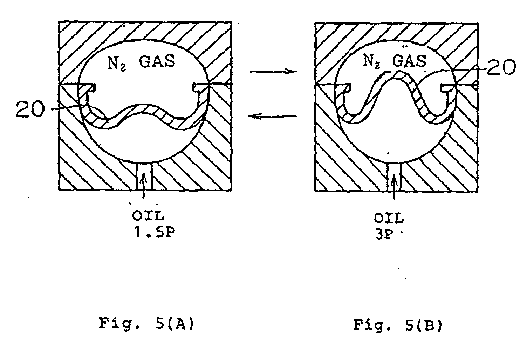

Each diaphragm was subjected to a flex cracking test during which changed alternately into the states (A) and (B) respectively shown in Figure 5 (A) and Figure 5 (B) as an operating durability test. In the test, N₂ gas was employed for a sealing gas and the states shown in Figure 5 (A) and Figure 5 (B) were caused by changing oil pressure in a range of 1.5 to 3 times of an initial sealing pressure (PO). In addition, test conditions were varied into two cases; one where change between the states (A) and (B) was effected 1,000,000 times at room temperature and the other where the change between the states (A) and (B) was effected 30,000 times at a low temperature (-30°C).

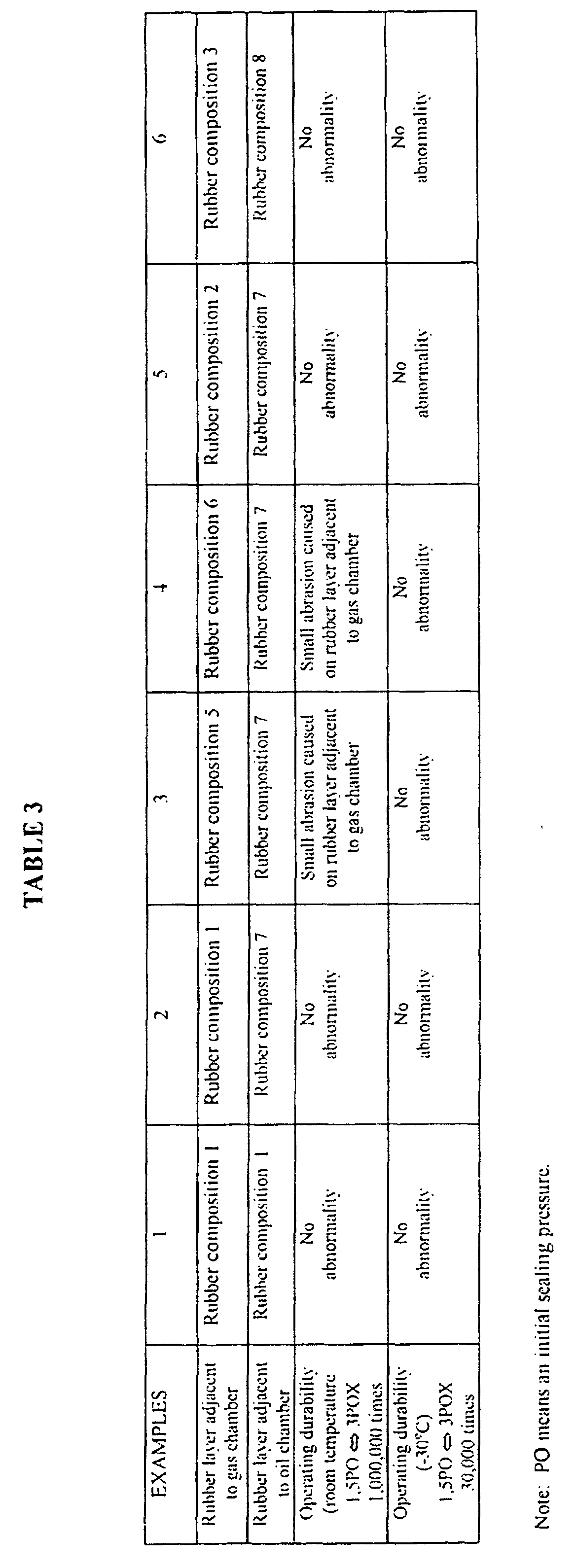

**TABLE 4**

| EXAMPLES | 7 | 8 | 9 | 10 | 11 |
|---|---|---|---|---|---|
| Rubber layer adjacent to gas chamber | Rubber composition 4 | Rubber composition 10 | Rubber composition 1 | Rubber composition 1 | Rubber composition 2 |
| Rubber layer adjacent to oil chamber | Rubber composition 9 | Rubber composition 8 | Rubber composition 8 | Rubber composition 9 | Rubber composition 9 |
| Operating durability (room temperature) 1.5PO⇔3POX 1,000,000 times | Small abrasion caused on rubber layer adjacent to gas chamber | No abnormality | No abnormality | No abnormality | No abnormality |
| Operating durability (-30°C) 1.5PO⇔3POX 30,000 times | No abnormality | No abnormality | No abnormality | No abnormality | No abnormality |
| Note: PO means an initial sealing pressure | | | | | |

**TABLE 5**

| Comparative Examples | 1 | 2 | 3 | 4 | 5 | 6 |
|---|---|---|---|---|---|---|
| Rubber layer adjacent to gas chamber | Rubber composition 7 | Rubber composition 8 | Rubber composition 9 | Rubber composition 7 | Rubber composition 8 | Rubber composition 9 |
| Rubber layer adjacent to oil chamber | Rubber composition 7 | Rubber composition 8 | Rubber composition 9 | Rubber composition 1 | Rubber composition 2 | Rubber composition 3 |
| Operating durability (room temperature) 1.5PO⇔3POX 1,000,000 times | Large abrasion caused on rubber layer adjacent to gas chamber | Large abrasion caused on rubber layer adjacent to gas chamber | Large abrasion caused on rubber layer adjacent to gas chamber | Large abrasion caused on rubber layer adjacent to gas chamber | Large abrasion caused on rubber layer adjacent to gas chamber | Large abrasion caused on rubber layer adjacent to gas chamber |
| Operating Durability (-30°C) 1.5PO⇔3POX 30,000 times | Crack caused on rubber layer adjacent to gas chamber | No abnormality | Crack caused on rubber layer adjacent to gas chamber | Crack caused on rubber layer adjacent to gas chamber | No abnormality | Crack caused on rubber layer adjacent to gas chamber |
| Note : PO means initial sealing pressure | | | | | | |

According to results of Tables 3 to 5, when using diaphragms of the Examples, in accordance with the invention there was no abnormality caused both at room temperature and a low temperature. In some Examples, there was small abrasion, which is no problem for use in the diaphragm of the accumulator. On the other hand, in case of using diaphragms of the Comparative Examples, that is to say diaphragms not in accordance with the invention, large abrasion and cracking was caused on the rubber layer adjacent to the gas chamber 3 both at room temperature and a low temperature.

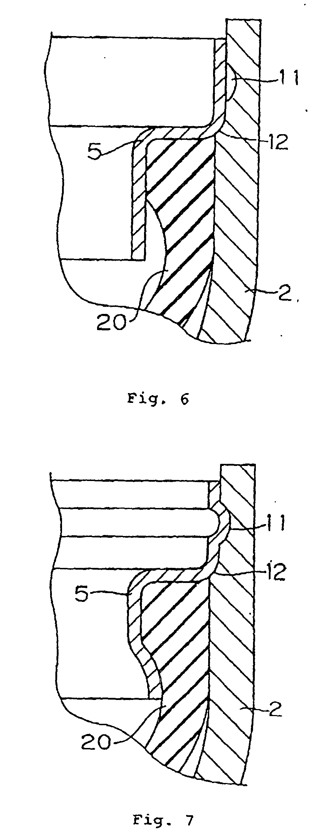

Next, an accumulator was prepared in the following manner using the diaphragm of Examples. As shown in Figure 1, an upper shell 1 and a lower shell 2 were prepared as a pair of split-shells and the diaphragm 20 was formed in such a manner that its periphery was relatively thick. The diaphragm 20 was fixed to an inner circumferential edge of an open mouth of the lower shell 2 using a ring holder 5 as shown in figures. In this case, as shown in Figure 6, a circumferential groove 11 was preliminarily formed on the inner circumferential surface of the open mouth of the lower shell 2 and a stepped portion 12 was formed under the groove 11. The ring holder 5 has a stepped structure, wherein an upper part thereof has a large diameter and a lower part thereof has a small diameter. The upper part of the ring holder 5 was positioned to engage the inner circumferential surface of the open mouth of the lower shell 2, with the lower region of the upper part engaging the stepped portion 12. The connection between the upper part and the lower part of the ring holder 5 was positioned to engage an edge of the diaphragm as formed by the end of the thick part of the diaphragm 20. The lower part of the ring holder 5 was positioned adjacent the thick part of diaphragm 20, so that the thick peripheral part of the diaphragm was located between the lower part of the ring holder and the inner circumferential surface of the lower shell 2. Then, the ring holder 5 was deformed by a deforming tool (not shown) as shown in Figure 7. Thereby, an inner circumferential thick part of the diaphragm was pinched by the lower periphery of the lower part of the ring holder 5 and the inner circumferential surface of the open of the lower shell 2. The centre of the upper part of the ring holder 5 is forced to bite into the circumferential groove 11 on the inner surface of the open of the lower shell 2. In this manner the ring holder 5 is secured in position and a good seal between the ring holder 5 and the lower shell 2 is achieved. Accordingly, permeation and leak of gas and oil between the lower shell 2 and the ring holder 5 can be prevented. In addition, the ring holder 5 may not slip by the step 12 provided in the inner surface of the open of the lower shell 2, so that the ring holder 5 can be positioned accurately. thus, the diaphragm 20 is installed onto the lower shell 2 and the open mouth of the upper shell 1 is engaged on to the open mouth of the lower shell 2, so that a generally spherical shell as a whole is formed. In this case, the mounting diaphragm 20 can be checked visually before installing the upper shell 1, which makes it possible to prevent poor installation of the diaphragm 20. A joint portion between the open of the upper split-shell 1 and the open of the lower split-shell 2 is welded by an electron beam and the like. Thereby, the weld can be very narrow resulting in a decrease of or prevention of thermal effect on the thick portion on the periphery of the diaphragm 20. In this way, the accumulator as shown in Figure 1 was prepared. In the accumulator, the internal space defined by the split-shells 1,2 is divided by the diaphragm 20 into the gas chamber 3 and the oil chamber 4. It has been found that the accumulator as described has superior durability and long service life compared with prior proposed accumulators.

As mentioned above, since the diaphragm of the present invention employs a mixture of butyl rubber and EPDM for forming the rubber layer adjacent to the gas chamber 3, operating characteristics, both at room temperature and a low temperature, are improved compared with a conventional diaphragm using butyl rubber alone, so that superior durability can be realised. The preferred accumulator using the diaphragm of the present invention has been found to have a prolonged service life compared with prior proposed accumulators.

In addition, in an embodiment where a plurality of circumferential grooves each having a concave cross-section, are formed on the surface of the rubber layer adjacent to the gas chamber 3, it has been found that the durability of the diaphragm and the accumulator using the same is further improved.

## Claims

1. A diaphragm (20) comprising a layer (21)of substantially gas impermeable resin, a first rubber layer (22) provided on one side of the resin layer, said rubber layer being formed of a mixture of butyl rubber and ethylene-propylene-diene terpolymer and a second rubber layer (23)on the other side of the resin layer.

2. A diaphragm according to claim 1 wherein said first rubber layer (22)is provided with a plurality of circumferential grooves (24), the grooves each having a concave cross-section.

3. A diaphragm according to claim 1 or 2 wherein the resin layer (21)is made from ethylene-vinyl alcohol copolymer (EVOH), polyamide resin, polyvinylidene fluoride, polyvinylidene chloride, polyphenylene sulfide, liquid crystal polymer and/or polyethylene naphthalate, alone or in any combination thereof.

4. A diaphragm according to claim 1 or 2 wherein the resin layer (21) is a laminate, the laminate having a central layer (21a) of ethylene-vinyl alcohol copolymer and outer layers (21 b) of a polyamide resin.

5. A diaphragm according to any one of the preceding claims wherein, in the first rubber layer (22), the ratio of butyl rubber to ethylene-propylene-diene terpolymer is between 90/10 and 60/40.

6. A diaphragm according to any one of the preceding claims wherein the rubber forming the second rubber layer (23) is the same as the rubber forming the first layer (22) or alternatively is butyl rubber, natural rubber, epichlorohydrin rubber, acrylonitrile butadiene rubber and/or hydrogenated acrylonitrile butadiene rubber alone or in any combination.

7. A diaphragm according to any one of the preceding claims wherein one or both of the rubber layers (22,23) incorporates an additive in the form of a vulcanizing agent, a vulcanizing accelerator, an antioxidant, a softener and/or a plasticiser.

8. An accumulator comprising a shell (1, 2) and a diaphragm (20) which divides an internal space within the shell into a gas chamber (3) and an oil chamber (4), the diaphragm comprising a diaphragm according to any one of the preceding claims.

9. An accumulator according to claim 8 wherein the accumulator comprises two hemispherical split shells, the diaphragm (20) being secured to one split shell adjacent an open mouth thereof by a ring holder (5) which seals the periphery of the diaphragm (20) to the inner surface of the said one split shell, the other split shell having an open mouth thereof secured to the open mouth of the first split shell.

10. An accumulator according to claim 9 wherein the ring holder (5) engages a circumferential thick part of the diaphragm.

## Patentansprüche

1. Membran (20), die eine Schicht (21) eines im wesentlichen gasimpermeablen Harzes, eine erste Kautschukschicht (22), die auf einer Seite der Harzschicht bereitgestellt ist, wobei die Kautschukschicht aus einer Mischung von Butylkautschuk und Ethylen-Propylen-Dien-Terpolymer gebildet ist, und eine zweite Kautschukschicht (23) auf der anderen Seite der Harzschicht umfaßt.

2. Membran nach Anspruch 1, **dadurch gekennzeichnet, daß** die erste Kautschukschicht (22) bereitgestellt ist mit einer Vielzahl von umfänglichen Rillen (24), wobei die Rillen jeweils einen konkaven Querschnitt aufweisen.

3. Membran nach Anspruch 1 oder 2, **dadurch gekennzeichnet, daß** die Harzschicht (21) hergestellt ist aus Ethylen-Vinylalkohol-Copolymer (EVOH), Polyamidharz, Polyvinylidenfluorid, Polyvinylidenchlorid, Polyphenylensulfid, Flüssigkristallpolymer und/oder Polyethylennaphthalat, alleine oder in irgendeiner Kombination derselben.

4. Membran nach Anspruch 1 oder 2, **dadurch gekennzeichnet, daß** die Harzschicht (21) ein Laminat ist, wobei das Laminat eine Mittelschicht (21a) aus Ethylen-Vinylalkohol-Copolymer und äußere Schichten (21b) eines Polyamidharzes aufweist.

5. Membran nach einem der vorangehenden Ansprüche, **dadurch gekennzeichnet, daß** in der ersten Kautschukschicht (22) das Verhältnis von Butylkautschuk zu Ethylen-Propylen-Dien-Terpolymer zwischen 90/10 und 60/40 ist.

6. Membran nach einem der vorangehenden Ansprüche, **dadurch gekennzeichnet, daß** der Kautschuk, welcher die zweite Kautschukschicht (23) bildet, der gleiche ist wie der Kautschuk, welcher die erste Schichte (22) bildet, oder altemativerweise Butylkautschuk, Naturkautschuk, Epichlorhydrinkautschuk, Acrylnitril-Butadien-Kautschuk und/oder hydrierter Acrylnitril-Butadien-Kautschuk, alleine oder in irgendeiner Kombination, ist.

7. Membran nach einem der vorangehenden Ansprüche, **dadurch gekennzeichnet, daß** eine oder beide der Kautschukschichten (22, 23) ein Additiv in der Form eines Vulkanisieragens, eines Vulkanisierbeschleunigers, eines Antioxidationsmittels, eines Erweichungsmittels und/oder eines Weichmachers integriert bzw. integrieren.

8. Akkumulator, welcher eine Schale (1, 2) und eine Membran (20) umfaßt, welche einen Innenraum innerhalb der Schale in eine Gaskammer (3) und eine Ölkammer (4) unterteilt, wobei die Membran eine Membran nach einem der vorangehenden Ansprüche umfaßt.

9. Akkumulator nach Anspruch 8, **dadurch gekennzeichnet, daß** der Akkumulator zwei halbkugelförmige, aufgespaltene Schalen umfaßt, wobei die Membran (20) an einer aufgespaltenen Schale, benachbart einer offenen Öffnung derselben, über einen Ringhalter (5) befestigt ist, welcher die Peripherie der Membran (20) gegenüber der inneren Oberfläche der einen aufgespaltenen Schale abdichtet, wobei die andere aufgespaltene Schale eine offene Öffnung derselben aufweist, die an der offenen Öffnung der ersten aufgespaltenen Schale befestigt ist.

10. Akkumulator nach Anspruch 9, **dadurch gekennzeichnet, daß** der Ringhalter (5) in einen umfänglichen dicken Teil der Membran eingreift.

## Revendications

1. Un diaphragme (20) comprenant une couche (21) de résine sensiblement imperméable aux gaz, une première couche de caoutchouc (22) placée sur un côté de la couche de résine, ladite couche de caoutchouc étant formée à partir d'un mélange de caoutchouc butyle et de terpolymère d'éthylène-propylène-diène et une seconde couche de caoutchouc (23 ) sur l'autre côté de la couche de résine.

2. Diaphragme selon la revendication 1 où ladite première couche de caoutchouc (22) est munie de plusieurs rainures périphériques (24), les rainures ayant chacune une section transversale concave.

3. Diaphragme selon la revendication 1 ou 2 où la couche de résine (21) est faite de copolymère d'éthylène et d'alcool vinylique (EVOH), de résine polyamide, de polyfluorure de vinylidène, de polychlorure de vinylidène, de polyphénylène sulfide, de polymère cristal liquide et/ou de naphtalate de polyéthylène, seuls ou selon une combinaison quelconque.

4. Diaphragme selon la revendication 1 ou 2 où la couche de résine (21) est un stratifié, le stratifié ayant une couche centrale (21a) de copolymère d'éthylène et d'alcool vinylique et des couches extérieures (21b) de résine polyamide.

5. Diaphragme selon l'une quelconque des revendications précédentes où, dans la première couche de caoutchouc (22), le rapport de caoutchouc butyle contre le terpolymère d'éthylène-propylène-diène est compris entre 90/10 et 60/40.

6. Diaphragme selon l'une quelconque des revendications précédentes où le caoutchouc formant la seconde couche de caoutchouc (23) est le même que le caoutchouc formant la première couche (22), ou se compose alternativement de caoutchouc butyle, de caoutchouc naturel, de caoutchouc épicholorohydrine, de caoutchouc acrylonitrile butadiène et/ou de caoutchouc acrylonitrile butadiène hydrogéné seuls ou selon une combinaison quelconque.

7. Diaphragme selon l'une quelconque des revendications précédentes où une ou les deux couches de caoutchouc (22, 23) incorpore (nt) un additif sous la forme d'un vulcanisant, d'un accélérateur de vulcanisation, d'un antioxydant, d'un adoucisseur et/ou d'un plastifiant.

8. Accumulateur comprenant une coque (1, 2) et Diaphragme (20) qui divise un espace intérieur dans la coque en une chambre à gaz (3) et une chambre d'huile (4), le diaphragme comprenant un diaphragme selon l'une quelconque des revendications précédentes.

9. Accumulateur selon la revendication 8 où l'accumulateur comprend deux coques divisées hémisphériques, le diaphragme (20) étant fixé à une coque divisée adjacente à un orifice ouvert de celle-ci par un support de bague (5) qui ferme la périphérie du diaphragme (20) sur la surface intérieure de ladite coque divisée, l'autre coque divisée ayant un orifice ouvert ainsi fixé à l'orifice ouvert de la première coque divisée.

10. Un accumulateur selon la revendication 9 où le support de bague (5) unit une partie épaisse périphérique du diaphragme.
